# EUROPEAN PATENT APPLICATION

(11) **EP 2 124 489 A1**
(43) Date of publication of application: **25.11.2009**
(21) Application number: 08156827.1
(22) Date of filing: 23.05.2008
(51) Int. Cl.: H04W 4/00

(54) **Apparatus and method for synchronised Inter-System Handover**

(71) Applicant: Nokia Siemens Networks Oy, 02610 Espoo (FI)
(72) Inventor: Beuer, Volker, 16727, Bötzow (DE); Martos-Riano, Demian, 10115, Berlin (DE); Ulrich, Thomas, 67098, Bad Dürkheim (DE)
(74) Representative: TBK-Patent

(57) **Abstract**

Embodiments provide a method and apparatus configured to derive time information such as a time base or timing offset for a first system and a second system, the first and second systems having a timing offset, and to inform at least one of the first and second systems on the time information for a handoff. The first system may e.g. be a third generation partnership project network or system, and the second system may e.g. be a code division multiple access network. The handoff source system may inform the handoff target system on the handoff time.

## Description

### FIELD OF TECHNOLOGY AND BACKGROUND

The invention generally relates to communication, traffic, and network elements, methods, apparatuses, systems and programs e.g. for handover such as for example synchronised inter-system handover.

In 3GPP UMTS (third generation partnership project universal mobile telecommunications system), and UMTS-LTE (universal mobile telecommunications system long term evolution), base stations do not need to be synchronised to a "master clock". Instead, a common (ubiquitous) timebase is not required in order to reduce implementation effort and deployment cost.

In contrast to this, cdma2000 strongly relies on a common timebase which is available to all base stations, usually provided by means of GPS.

Regarding handover it may be advantageous for seamless operation (i.e. for the user not notifying any negative effect of the handover on the service being used) that the time of handover execution is well determined. However, this "time of execution" may be blurred by the usage of two different radio timing systems e.g. in a 3GPP system or network, and a non-3GPP system or network such as e.g. cdma2000. In 3GPP, the local time in base station may correspond to the local timer in NodeB or evolved eNodeB, and may be equal to Node B frame number counter, BFN, or connection frame number, CFN. In a non-3GPP system or network, e.g. in cdma2000, GPS-related timing may be used as an example. At the time of handovers between such systems, reselections may be performed, which may lead to service interruption or at least to quality degradation during handover execution.

### SUMMARY

In accordance with at least one, more or all of the embodiments, the invention provides an apparatus, method, and program product as defined in one or more of the claims.

In accordance with one or more embodiments of the invention, information on timebases or timers in both systems may be provided. The information may e.g. include an offset value, and may be provided towards base stations and/or user equipments, UEs, during inter-system handover preparation.

In accordance with one or more embodiments of the invention, timebases may be known, or made known, for both systems. Handover execution may therefore happen faster, and may be performed at a well determined instance of time, resulting in less impact on service quality.

Embodiments of the invention may be applied also to other cases where co-ordination between systems with differing time-bases is desired or required.

Embodiments allow a synchronised inter-system handover or other type of interaction between two or more systems.

In accordance with one or more embodiments of the invention, an apparatus is configured to derive time information such as a time base or timing offset for a first system and a second system, and to inform at least one of the first and second systems on the time information.

The first system may e.g. be at least one of a network or system not having a common timebase, a third generation partnership project network or system, and a handoff source or target system (5) or network. The second system may e.g. be at least one of a system or network having a common timebase, a code division multiple access network, a cdma2000 network, and a handoff target or source system or network.

The apparatus may e.g. be at least one of a base station, a nodeB, an eNodeB, a controller, a network controller, or a radio network controller of the first or second system, a time server, a terminal, or a part, module, or chipset of such a base station, nodeB, eNodeB, controller, network controller, radio network controller, time server, or terminal.

The apparatus may e.g. comprise a global positioning system receiver, or form part of one of the systems, or may e.g. be configured to derive time information such as a time base or timing offset for the other one of the systems based on signals of the receiver.

The apparatus may e.g. be configured to at least one or more of, in any arbitrary combination:
derive a timing or target timer of a handover target system; decide on the time of execution of a handover;
inform a terminal on the time of execution of the handover in terms of a timing of the handover source system, e.g. a connection frame number;
inform the handover target system on the time of execution of the handover, optionally in terms of a timing of the handover target system;
inform the terminal on an offset of timing between the handover source system and the handover target system; calculate a connection frame number or time of handover based on a radio network controller frame number, RFN, knowledge of a RFN/nodeB frame number, BFN, time difference, knowledge of BFN/SFN offset and from cell system frame number, SFN/CFN offset;
achieve knowledge of a RFN/nodeB frame number, BFN, time difference by a RNC-NodeB node synchronisation procedure; inform the terminal on the time base in target system.

The apparatus may e.g. be configured to at least one or more of, in any arbitrary combination:
inform the target system on a source system timing, e.g. CFN-timing "now";
perform a RNC-NodeB node synchronisation;
receive an answer from the target system having a time-stamp or time indication;
calculate, based on the received time-stamp or time information, a timing offset between the source system and the target system.

The apparatus may e.g. be configured to at least one or more of, in any arbitrary combination:
provision of timing offset by a node or time server;
receive from the node or time server which is aware of radio timing in both systems, one or more timing parameters such as time offset or drift;
inform the terminal on a handover time, optionally in terms of source-system timebase;
inform the terminal on a current time-offset between the source and target systems.

In accordance with one or more embodiments of the invention, an apparatus, optionally having zero, one, more or all of the above mentioned features, in any arbitrary combination, may e.g. be configured to at least one or more of, in any arbitrary combination:
being a time server;
being co-located in a mobility management entity, MME;
having knowledge on timers in both systems, such as GPS time for e.g. a cdma2000 network, and e.g. BFNs/CFNs (i.e. BFNs plus offsets) for 3GPP;
having knowledge of GPS-time;
deriving knowledge of BFNs/CFNs of 3GPP nodes;
performing a RNC-NodeB node synchronisation procedure.

In accordance with one or more embodiments of the invention, an apparatus, optionally having zero, one, more or all of the above mentioned features, in any arbitrary combination, may e.g. be configured to at least one or more of, in any arbitrary combination:
provide user equipment measurement for time-relation;
a dual-receiver user equipment is configured to read or calculate a time-offset between a source system and a target system;
the user equipment is configured to report the time-offset to the source system.

In accordance with one or more embodiments of the invention, a method may comprise deriving time information such as a time base or timing offset for a first system and a second system, and informing at least one of the first and second systems on the time information.

The method may e.g. comprise at least one or more of, in any arbitrary combination:
the first system may e.g. be at least one of a network or system not having a common timebase, a third generation partnership project network or system, and a handoff source or target system or network;
the second system may e.g. be at least one of a system or network having a common timebase, a code division multiple access network, a cdma2000 network, and a handoff target or source system or network;
at least one of a base station, a nodeB, an eNodeB, a controller, a network controller, or a radio network controller of the first or second system, a time server, a terminal, or a part, module, or chipset of such a base station, nodeB, eNodeB, controller, network controller, radio network controller, time server, or terminal.

In accordance with one or more embodiments of the invention the method may comprise deriving time information such as a time base or timing offset for one of the systems based on signals of a global positioning system receiver.

In accordance with one or more embodiments of the invention, the method may e.g. comprise at least one or more of, in any arbitrary combination:
deriving a timing or target timer of a handover target system; deciding on the time of execution of a handover;
informing a terminal on the time of execution of the handover in terms of a timing of a handover source system, e.g. a connection frame number;
informing the handover target system on the time of execution of the handover, optionally in terms of a timing of the handover target system;
informing the terminal on an offset of timing between the handover source system and the handover target system; calculating a connection frame number or time of handover based on a radio network controller frame number, RFN, knowledge of a RFN/nodeB frame number, BFN, time difference, knowledge of BFN/SFN offset and from cell system frame number, SFN/CFN offset;
achieving knowledge of a RFN/nodeB frame number, BFN, time difference by a RNC-NodeB node synchronisation procedure; informing the terminal on the time base in target system.

In accordance with one or more embodiments of the invention, the method may e.g. comprise at least one or more of, in any arbitrary combination:
informing the target system on a source system timing, e.g. CFN-timing "now";
performing a RNC-NodeB node synchronisation;
receiving an answer from the target system having a time-stamp or time indication;
calculating, based on the received time-stamp or time information, a timing offset between the source system and the target system;
providing a timing offset by a node or time server;
receiving from the node or time server which is aware of radio timing in both systems, one or more timing parameters such as time offset or drift;
informing a terminal on a handover time, optionally in terms of source-system timebase;
informing the terminal on a current time-offset between the source and target systems;
providing a time server;
co-locating the time server in a mobility management entity, MME;
the time server having knowledge on timers in both systems, such as GPS time for e.g. a cdma2000 network, and e.g. BFNs/CFNs (i.e. BFNs plus offsets) for 3GPP;
having knowledge of GPS-time;
deriving knowledge of BFNs/CFNs of 3GPP nodes;
performing a RNC-NodeB node synchronisation procedure; providing user equipment measurement for time-relation; providing a dual-receiver user equipment configured to read or calculate a time-offset between a source system and a target system;
the user equipment reporting the time-offset to the source system.

In accordance with one or more embodiments of the invention, a computer program product may comprise code means configured to carry out or implement, when run on a processor, a method which may e.g. comprise at least one or more, in any arbitrary combination, of the above or below mentioned features.

A network may comprise such an apparatus as mentioned above or in the following text. The network may comprise a long-term evolution, LTE, structure or an evolved packet system, EPS, architecture, or may comprise at least one of a serving general packet radio service support node, SGSN, a mobility management entity, MME, or a gateway.

In accordance with one or more of the embodiments of the invention, a computer program product is provided which comprise code means configured to carry out or implement, when run on a processor, a method as defined in the claims or description.

The computer program product may e.g. be embodied on a computer-readable medium.

Other objects, features and advantages of the invention will become apparent from the following description of embodiments of the invention.

### BRIEF DESCRIPTION OF DRAWINGS

Fig. 1 illustrates an embodiment of a system and apparatuses in accordance with the invention;
Fig. 2 shows an embodiment configured in accordance with an implementation of the invention;
Fig. 3 illustrates another embodiment of the invention;
Fig. 4 shows a further embodiment of the invention,
Fig. 5 illustrates another embodiment of the invention;
Fig. 6 shows an embodiment configured in accordance with an implementation of the invention;
Fig. 7 illustrates another embodiment of the invention;
Fig. 8 shows an embodiment configured in accordance with an implementation of the invention; and
Fig. 9 shows an embodiment configured in accordance with an implementation of the invention.

### DESCRIPTION OF EMBODIMENTS

In accordance with one or more of the embodiments, the invention relates to timing provision in case of systems having different time bases, e.g. for handoff (handover), or other purposes.

The scenario depicted in one or more of embodiments of the invention refers to a handover situation from an e.g. 3GPP system or network such as a long term evolution, LTE, system or network, towards a network or system having a common time-base such as a code division multiple access system like e.g. a cdma2000 network or system as an example.

In accordance with one or more embodiments of the invention as described below, several options are provided which may be applied as alternatives or in any arbitrary combination.

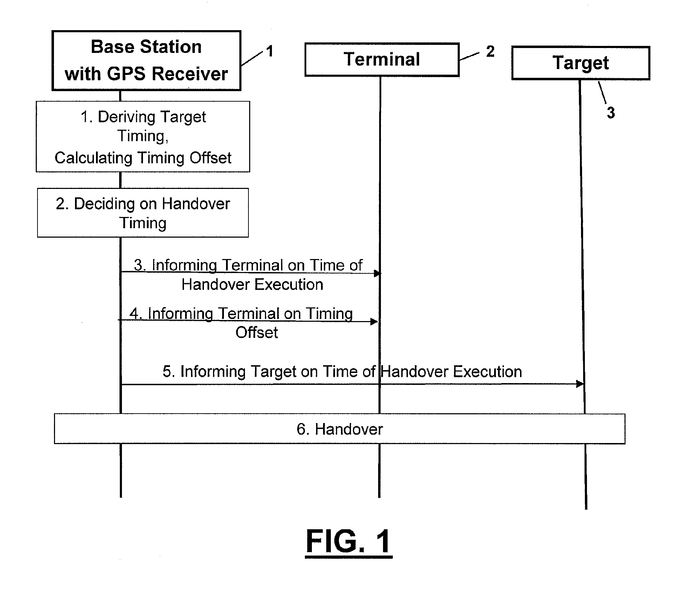

According to an embodiment shown in Fig. 1, an option of local provision of target timing in a base station 1 such as a 3GPP base station or 3GPP nodeB or evolved nodeB, eNodeB, is implemented. This embodiment is e.g. suited for a handover from a 3GPP network to a cdma system such as cdma2000, enabling a 3gPP to cdma2000 handoff.

The embodiment of Fig. 1 provides an implementation for a case in which a radio resource control, RRC, or an entity terminating or applying a radio resource control protocol, RRC protocol, is residing in a base station, e.g. a 3GPP base station. A 3GPP base station 1, or a 3GPP network controller such as a radio network controller, RNC, comprises a GPS-receiver and is configured or able to derive a timing of a handover target network such as a cdma2000-timing, i.e. target timer, on its own, as shown in block 1. of Fig. 1.

In step 1., the base station 1 may additionally calculate the timing offset between the time base of the network comprising the base station 1, and the other network (target) 3.

The base station 1 decides, as shown in block 2., on the handover timing, i.e. when to execute the handover. As indicated by message 3., the base station 1 informs a terminal 2 such as a user equipment or any other type of mobile or stationary communication apparatus being subject of the imminent handover, on the handover timing, such as the time of handover execution. The information on the handover timing may be sent to the terminal 2 e.g. via the radio resource control and RRC protocol. The information on the handover timing may be sent to the terminal 2 in terms of 3GPP timing such as connection frame number, CFN.

Further, as shown by message 5., the base station 1 informs a target 3 such as a controller, system, base station, network or apparatus of the network taking over the call or connection to be handed off, on the handover timing, such as the time of handover execution. The information on the handover timing may be sent to the target system e.g. via S1>MME, mobility management entity. The information on the handover timing may be sent to the target system in terms of cdma2000 timing.

As shown by an optional step 4., it may be advantageous to inform the terminal 2, in addition to the time of handover execution, on the offset of timing of the source system 1 towards the target system 3, e.g. cdma2000. The terminal 2 may calculate the time base of the target system from this timing offset before, during or after handoff, and may benefit from knowing the time base in the target system. Providing the timing offset to the terminal 2 in step 4. eliminates time and processing load otherwise needed by the terminal 2 for retrieving the time base from the target system.

As shown in block 6., a handover from the network comprising the base station 1 to the target system 3 is performed.

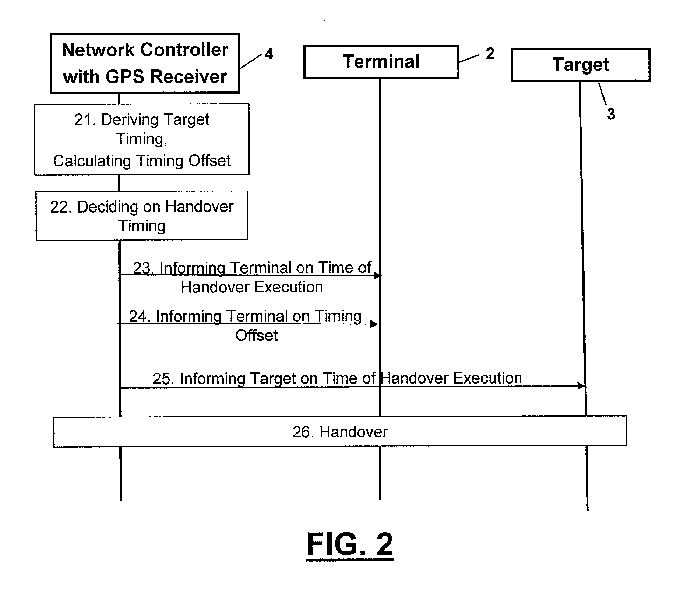

Fig. 2 illustrates another embodiment in which a radio resource control, RRC, or an RRC apparatus or function, is residing in a controller 4 of a radio or access network such as a radio network controller, RNC, or base station controller, or access network controller.

The controller 4, e.g. a 3GPP RNC, comprises a GPS-receiver and is configured or able to derive a timing of the target network 3, e.g. a cdma2000-timing or target timer, on its own, as shown in block 21. The controller 4 may additionally calculate a timing offset between the source network timing actually handling the connection to the terminal 2, and the target network 3 which is to take over the connection.

In step 22., the controller 4 decides on the time point of executing the handover, i.e. when to execute the handover.

The controller 4 may for example calculate the execution time, e.g. the connection frame number, CFN, time of handover, from its RNC frame number, RFN, or RFN counter. Alternatively or additionally, the controller 4 may calculate the handover execution time from its knowledge of the RFN/BFN time difference, from the knowledge of BFN/SFN offset and/or from SFN/CFN offset.

The controller 4 may e.g. achieve the knowledge of the RFN/BFN time difference based on a synchronisation procedure such as by "RNC-NodeB Node Synchronisation", as described in TS 25.402, Version 7.5.0, Section 6.1.1.

In step 23., the controller 4 informs the terminal 2 on the execution time, e.g. via RRC, in terms of 3GPP timing, such as the connection frame number CFN. In step 25., the controller 4 informs the target system, e.g. via S1>MME, on the handover execution time in terms of target timing such as cdma2000 timing. The controller 4 may comprise a calculating means or function for calculating the target timing of handover execution based on the 3GPP timing and the timing offset between the handover source and target systems.

It may be advantageous to inform the terminal 2, in addition to the time of handover execution, on the offset of 3GPP timing towards the target system, e.g. cdma2000, as shown in step 24. The terminal UE 2 may benefit from knowing the time base in target system. Informing the terminal UE 2 on the time difference allows avoiding a need of retrieving this time base directly from the target system and thus sparing the time necessary for such a retrieval.

In step 26., the handover from the network or system comprising the controller 4 to the target 3 may be performed.

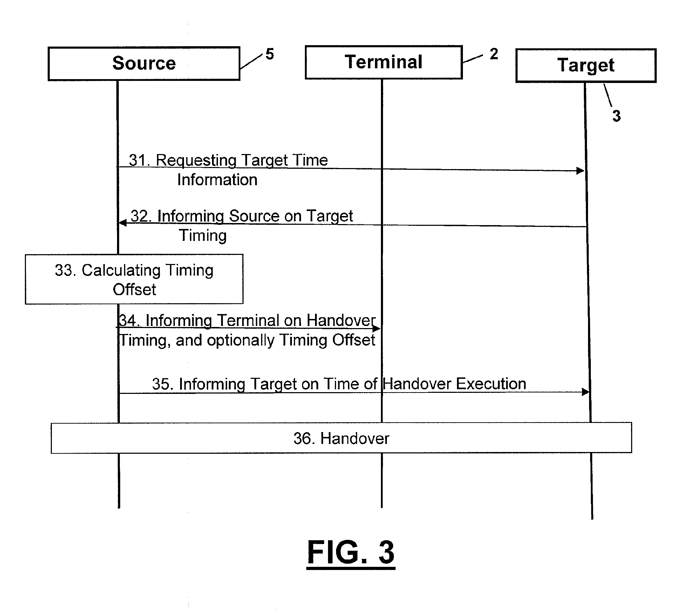

Fig. 3 illustrates another embodiment in accordance with the invention which comprises an option of providing target timing to the target system 3 such as a cdma2000 network. The embodiment of Fig. 3 is e.g. suited for cdma2000 to 3GPP handoff.

In the implementation of Fig. 3, a source 5 such as a 3GPP base station or a source controller or RNC, if RRC is not located in base station such as e.g. in an UMTS case, informs the target system 3 such as a cdma2000 system or network on a time information of the source network time like CFN-timing "now".

This can be achieved e.g. by means similar to "RNC-NodeB Node Synchronisation", or another kind of "timing-message ping pong", see TS 25.402 section 6.1.1, e.g. under the assumption of symmetrical transport network layer, TNL, delays. The cdma2000 system 3 answers to "time-now messages" by stamping the incoming and/or reply message with a cdma2000 timestamp. Using these cdma2000 timestamps and the CFNs of that time when messages were sent and received, 3GPP system is in the position to calculate the timing offset between the two systems.

As shown in Fig. 3, the source network 5, i.e. the network to which the terminal to be handed off is presently attached, or a controller or base station of the source network, sends a message 31 to the target 3 or target network, informing the target on the timing or time base of the source network 5, and/or requesting time information from the target network 3.

In a response 32., the target 3 sends time information of the target 3 to the source 5.

In a step 33., the source 3 calculates the timing offset between the time bases of the source and target based on the response 32 and the source time.

As indicated by message 34., the source 5 informs the terminal 2 such as a user equipment or any other type of mobile or stationary communication apparatus being subject of the imminent handover, on the handover timing, such as the time of handover execution, and optionally on the timing offset between the time bases of the source and target systems. The information on the handover timing may be sent to the terminal 2 e.g. via the radio resource control and RRC protocol. The information on the handover timing may be sent to the terminal 2 in terms of 3GPP timing such as connection frame number, CFN.

Further, as shown by message 35., the source 5 informs the target 3 such as a controller, system, base station, network or apparatus of the network taking over the call or connection to be handed off, on the handover timing, such as the time of handover execution. The information on the handover timing may be sent to the target system e.g. via S1>MME, mobility management entity. The information on the handover timing may be sent to the target system in terms of cdma2000 timing.

As shown in block 36., a handover from the source network 5 to the target system 3 is performed.

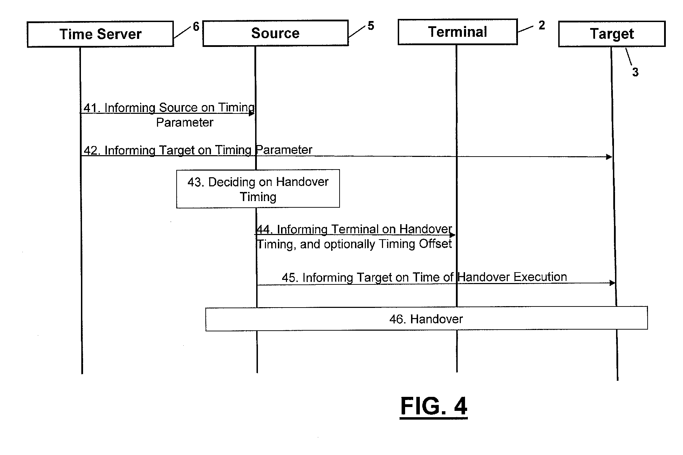

Fig. 4 illustrates another embodiment in accordance with the invention which comprises an option of providing a timing offset by an upper node such as a time server 6. The embodiment of Fig. 4 is suited for both directions of handoff e.g. from cdma2000 to 3GPP handoff, and vice versa.

The time server 6 may be a function or apparatus which is aware of radio timing in both systems and provides timing parameters one or both of the source and target networks. The timing parameter may comprise the time offset and/or other timing information such as drift information etc. The timing parameters may be provided from the time server 6 towards an RRC-entity in a source base-station/NodeB/eNodeB 5 or respectively to a source controller or RNC if RRC is not located in base station, as shown in step 41.; or towards a target base-station/NodeB/eNodeB 3, or respectively a target controller or RNC if RRC is not located in the target base station, as shown in step 42; or to both the source base station/NodeB/eNodeB/controller/RNC, and the target base station/NodeB/eNodeB/controller/RNC.

The source 5 RRC decides on handover timing in step 43., and informs, in step 44., the terminal 2 on the resulting handover time, typically in terms of source-system timebase, as well as optionally on the timing offset. In a 3GPP source system, the source 5 may send the connection frame number CFN as handover time which CFN is derived from RFN. The RRC-entity in source system 5 may inform the radio resource control RRC of the terminal 2 on the current time-offset, as shown in step 44, in order to ease radio timing in the target system, i.e. the RRC does not need to receive timing information in target system but has a well established timebase.

In step 45., the target system 3 is informed on the time of handover execution. In step 46., the handover is executed.

Such a time server 6 may be co-located in the mobility management entity, MME. The time server 6 has knowledge on timers in both systems, i.e. GPS time for cdma2000 and BFNs/CFNs (i.e. BFNs plus offsets) for 3GPP. Whilst GPS-time is easily available in such a central time server, knowledge of BFNs/CFNs from 3GPP nodes may be provided using e.g. a scheme similar to "RNC-NodeB Node Synchronisation" (see TS 25.402, section 6.1.1) or others. In addition the time server 6 is provided with knowledge of BFN/SFN/CFN offsets, e.g. from the radio resource control RRC.

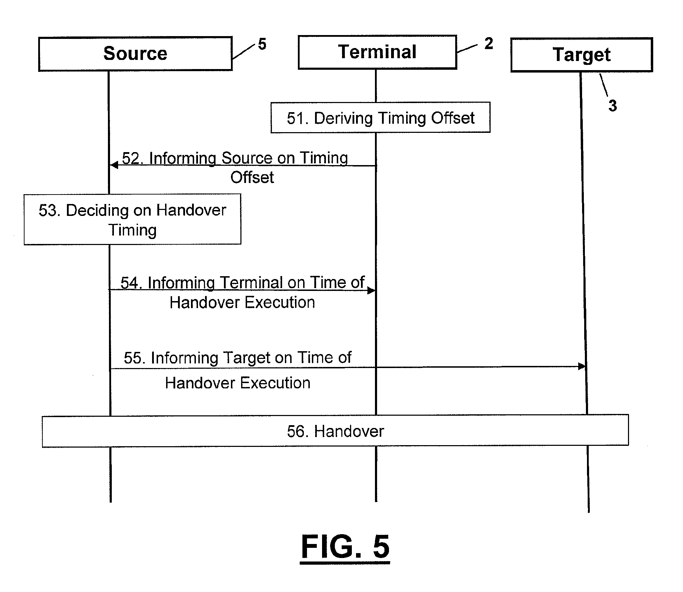

Fig. 5 shows an embodiment in accordance with the invention.

The Fig. 5 embodiment implements a terminal 2 measurement for time-relation. This embodiment is suited for both directions of handoff between a system, e.g. 5, having no common time-base and a system, e.g. 3, having a common time-base.

A dual-receiver terminal 2, UE, is deriving, such as reading or measuring, the time-offset between both systems 4, 3, as shown in step 51. In step 52., the terminal 2 informs or reports this time-offset to the source 4, e.g. to the radio resource control RRC of the source 4. The source RRC decides on the handover time in step 53., and informs the terminal 2 in step 54. on the time of handover execution. The source 4 or source RRC uses the reported offset received in step 52. to indicate handover timing to the target RRC in step 55. The handover is executed in step 56.

In accordance with one or more or all embodiments of the invention, advantages are provided in that timebases are well known for both systems, and handover execution or other processes are expected to happen faster and at well determined instance of time, resulting in less impact on service quality.

In embodiments of the invention, timing information may be visible on terrestrial interfaces. The format of timing information may be defined or even standardised.

In accordance with one or more embodiments of the invention, 3GPP inter-working such as inter-working of 3GPP-LTE with e.g. cdma2000 may be provided. One or more embodiments may be implemented so as to allow such inter-working of the radio access systems with, or without, message exchange between UE and both corresponding systems (source and target system). As a terminal or UE can does not necessarily have two radio links (to 3GPP system and non-3GPP system) active in parallel (i.e. at same time) embodiments may be implemented without requiring tunnelling of messages for one system (handover target system) via the other system (handover source system).

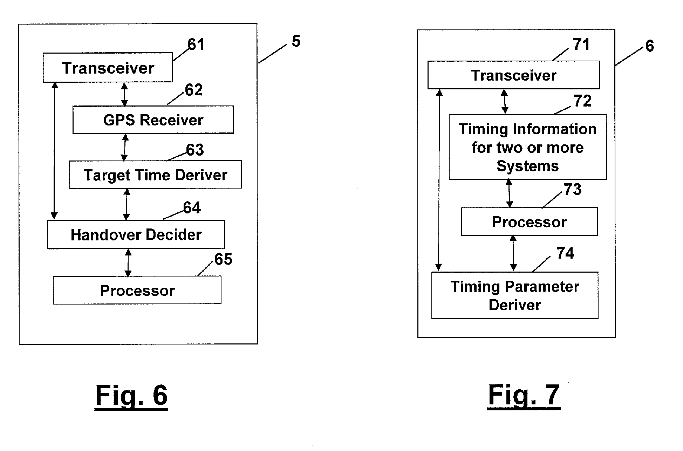

Fig. 6 illustrates an embodiment of a handover source system or apparatus 5 such as base station 1 of Fig. 1 or network controller 4 of Fig. 2, or source 5 of Figs. 3 to 5. Fig. 6 shows an implementation which comprises a transceiver 61 for signals such as e.g. radio signals, a GPS receiver 62 for receiving time information such as GPS time, a target time deriver device or function 63 for deriving, e.g. calculating or estimating, a time base of another system such as a handover target system like a common time-base system, e.g. a cdma 2000 system, a handover decider device or function 64, and a processor 65 for processing such as controlling at least part of the apparatus 5.

Fig. 7 shows an embodiment of an apparatus such as the time server 6 of Fig. 4. According to Fig. 7, the apparatus comprises a transceiver 71 for signals such as e.g. radio signals, a device or function 72 for detecting or receiving timing information of two or more systems such as the networks 3, 5, a processor 73 for processing such as controlling at least part of the apparatus 6, and a timing parameter deriver device or function 74 for deriving, e.g. calculating or estimating, timing parameters which may be sent, via the transceiver 71, to one or more of the respective systems or networks 3, 5 for informing the systems or networks on a timing parameter such as a time-base, timepoints, time differences or the like, etc.

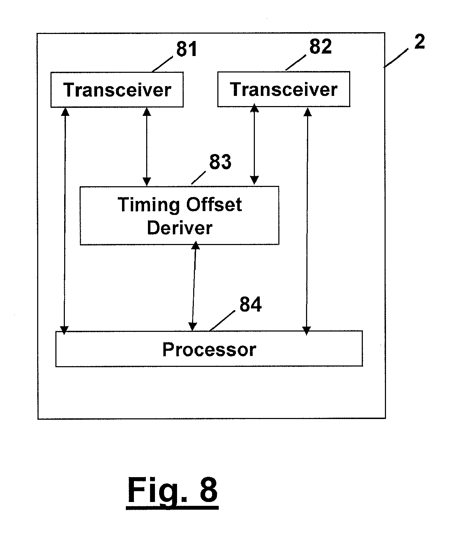

Fig. 8 illustrates an embodiment of an apparatus 2 which may be a dual-mode terminal, or a part, module, chipset etc of a terminal. According to Fig. 8, the apparatus comprises a transceiver 81 for transmitting or receiving signals such as e.g. radio signals to or from a network, e.g. an access network, another receiver 82 for transmitting or receiving signals such as e.g. radio signals to or from another network, e.g. an access network, a device or function 83 for detecting, deriving or receiving timing information of the two or more networks such as the networks 3, 5, and for deriving, e.g. calculating, a timing offset, and a processor 84 for processing such as controlling at least part of the apparatus 2.

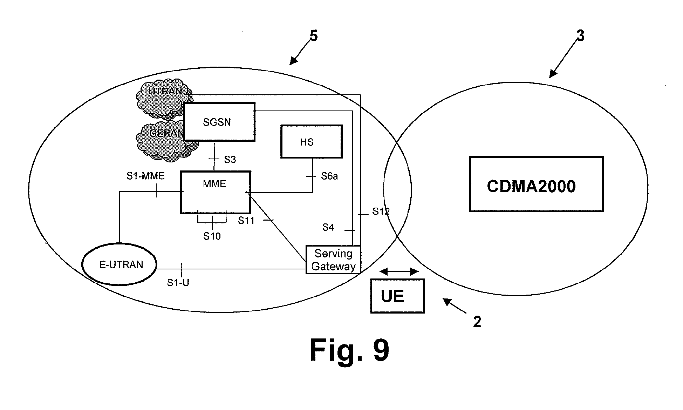

Fig. 9 illustrates examples of networks 3, 5. According to this embodiment the network 3 may be a cdma2000 network which may serve as handover source or target network. The network 3 may also have any other structure and may have a common timebase. In the embodiment of Fig. 9, the network 5 may have an LTE or evolved packet system, EPS, architecture, and may serve as handover source or target network, depending e.g. on the movement direction of the terminal or UE 2, as shown by a double-headed arrow in Fig. 9. The network 5 may also have any other structure and need not have a common timebase. In other embodiments both or none of the networks 3, 5 may have a common time-base. The network 5 architecture shown in Fig. 9 may comprise one or more of a serving GPRS, general packet radio service, support node, SGSN, a mobility management entity, MME, for managing mobility, UE identities and security parameters, a UMTS terrestrial radio access network, UTRAN, a GERAN, GSM/EDGE, Enhanced Data rate for GSM Evolution, radio access network, E-UTRAN, a HS, a serving gateway e.g. for terminating an interface towards E-UTRAN, a packet data network, PDN, etc.

Generally a MME, Mobility Management Entity, may be an element in a core network of a long-term evolution, LTE, see for example TS 23.882. RRC, radio resource control protocol (TS25.331), respectively refers to a logical entity terminating this protocol (in RNC for UTRAN; in eNodeB for UTRAN-LTE). RFN is described e.g. in TS 25.402 section 5: "RNC Frame Number counter. This is the RNC node common frame number counter. RFN is optionally frequency-locked to a Network synchronisation reference. Range: 0...4095 frames". As to BFN, TS 25.402, section 5 mentions: "Node B Frame Number counter. This is the Node B common frame number counter. [FDD: BFN is optionally frequency-locked to a Network synchronisation reference]. Range: 0...4095 frames". Regarding SFN, TS 25.402, section 5: "Cell System Frame Number counter. SFN is sent on BCH. SFN is used for paging groups and system information scheduling etc. In FDD SFN = BFN adjusted with T_cell. In TDD, if Inter Node B synchronisation port is used, SFN is locked to the BFN (i.e. SFN mod 256 = BFN mod 256). Range: 0 .. 4095 frames." As to CFN, TS 25.402, section 5: "Connection Frame Number (counter). CFN is the frame counter used for the L2/transport channel synchronisation between UE and UTRAN. A CFN value is associated to each TBS and it is passed together with it through the MAC-L1 SAP. CFN provides a common frame reference (at L2) to be used e.g. for synchronised transport channel reconfiguration (see [2] and [3])...".

For the purpose of the present invention as described herein above, it should be noted that any access or network technology may be used which may be any technology by means of which e.g. a user equipment can access a network. The network may be any device, unit or means by which a mobile or stationary entity or other user equipment may connect to and/or utilize services offered by the network. Such services may include, among others, data and/or (audio-) visual communication, data download etc.

Generally, the present invention is also applicable in network/terminal environments relying on a data packet based transmission scheme according to which data are transmitted in data packets and which are for example based on the Internet Protocol IP. The present invention is, however, not limited thereto, and any other present or future IP or mobile IP version, or, more generally, a protocol following similar or other principles is also applicable. The user equipment entity may be any device, unit or means by which a system user may experience services from a network.

The sequence of method steps described above or shown in the drawings can be implemented in any other sequence arbitrarily deviating from the above described or shown sequence of steps.

Further, the method, apparatuses and devices, may include only one, more or all of the features described above or shown in the drawings, in any arbitrary combination. The method steps may be implemented as software code portions and be run using a processor at a network element or terminal, can be software code independent, or can be specified using any known or future developed programming language as long as the functionality defined by the method steps is preserved. Generally, any method step is suitable to be implemented as software or by hardware without changing the idea of the present invention in terms of the functionality implemented.

Devices, apparatus, units, or means, and/or method steps may be implemented as hardware components of a stationary or mobile station, or a terminal, or a network element, or part, or chipset, or module thereof, which part, or chipset, or module may e.g. be used for an apparatus; may be hardware independent; and may be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components. Devices, apparatus, units or means (e.g. User equipment, CSCF) can be implemented as individual devices, units, means, chipsets, modules, or part of devices, and may also be implemented in a distributed fashion throughout a system, as long as the functionality of the device, unit or means is preserved.

## Claims

1. An apparatus configured to derive time information such as a time base or timing offset for a first system (5) and a second system (3), and to inform at least one of the first and second systems on the time information.

2. An apparatus according to claim 1, wherein
the first system (5) is at least one of a network or system not having a common timebase, a third generation partnership project network or system, and a handoff source or target system (5) or network, and
the second system (3) is at least one of a system or network having a common timebase, a code division multiple access network, a cdma2000 network, and a handoff target or source system or network.

3. Apparatus according to any one of the preceding claims, wherein the apparatus is at least one of a base station, a nodeB, an eNodeB, a controller, a network controller, or a radio network controller of the first or second system, a time server, a terminal, or a part, module, or chipset of such a base station, nodeB, eNodeB, controller, network controller, radio network controller, time server, or terminal.

4. Apparatus according to any one of the preceding claims, wherein the apparatus comprises a global positioning system receiver, forms part of one of the systems, and is configured to derive time information such as a time base or timing offset for the other one of the systems (3, 5) based on signals of the receiver.

5. Apparatus according to any one of the preceding claims, being configured to at least one of:
derive a timing or target timer of a handover target system,
decide on the time of execution of a handover,
inform a terminal on the time of execution of the handover in terms of a timing of the handover source system, e.g. a connection frame number,
inform the handover target system on the time of execution of the handover, optionally in terms of a timing of the handover target system;
inform the terminal on an offset of timing between the handover source system and the handover target system,
calculate a connection frame number or time of handover based on a radio network controller frame number, RFN, knowledge of a RFN/nodeB frame number, BFN, time difference, knowledge of BFN/SFN offset and from cell system frame number, SFN/CFN offset,
achieve knowledge of a RFN/nodeB frame number, BFN, time difference by a RNC-NodeB node synchronisation procedure,
inform the terminal on the time base in target system.

6. Apparatus according to any one of the preceding claims, being configured to at least one of:
inform the target system on a source system timing, e.g. CFN-timing "now",
perform a RNC-NodeB node synchronisation,
receive an answer from the target system having a time-stamp or time indication,
calculate, based on the received time-stamp or time information, a timing offset between the source system and the target system.

7. Apparatus according to any one of the preceding claims, being configured to at least one of:
provision of timing offset by a node or time server,
receive from the node or time server which is aware of radio timing in both systems, one or more timing parameters such as time offset or drift,
inform the terminal on a handover time, optionally in terms of source-system timebase,
inform the terminal on a current time-offset between the source and target systems.

8. Apparatus, preferably according to any one of the preceding claims, being configured to at least one of:
being a time server,
being co-located in a mobility management entity, MME,
having knowledge on timers in both systems, such as GPS time for e.g. a cdma2000 network, and e.g. BFNs/CFNs (i.e. BFNs plus offsets) for 3GPP,
having knowledge of GPS-time,
deriving knowledge of BFNs/CFNs of 3GPP nodes,
performing a RNC-NodeB node synchronisation procedure.

9. Apparatus, preferably according to any one of the preceding claims, being configured to at least one of:
provide user equipment measurement for time-relation,
a dual-receiver user equipment is configured to read or calculate a time-offset between a source system and a target system,
the user equipment is configured to report the time-offset to the source system.

10. A method, comprising deriving time information such as a time base or timing offset for a first system (5) and a second system (3), and informing at least one of the first and second systems on the time information.

11. Method according to claim 10, comprising at least one of:
the first system (5) is at least one of a network or system not having a common timebase, a third generation partnership project network or system, and a handoff source or target system (5) or network, and
the second system (3) is at least one of a system or network having a common timebase, a code division multiple access network, a cdma2000 network, and a handoff target or source system or network,
at least one of a base station, a nodeB, an eNodeB, a controller, a network controller, or a radio network controller of the first or second system, a time server, a terminal, or a part, module, or chipset of such a base station, nodeB, eNodeB, controller, network controller, radio network controller, time server, or terminal.

12. Method according to claim 10 or 11, comprising deriving time information such as a time base or timing offset for one of the systems (3, 5) based on signals of a global positioning system receiver.

13. Method according to any one of claims 10 to 12, comprising at least one of:
deriving a timing or target timer of a handover target system,
deciding on the time of execution of a handover,
informing a terminal on the time of execution of the handover in terms of a timing of a handover source system, e.g. a connection frame number,
informing the handover target system on the time of execution of the handover, optionally in terms of a timing of the handover target system;
informing the terminal on an offset of timing between the handover source system and the handover target system,
calculating a connection frame number or time of handover based on a radio network controller frame number, RFN, knowledge of a RFN/nodeB frame number, BFN, time difference, knowledge of BFN/SFN offset and from cell system frame number, SFN/CFN offset,
achieving knowledge of a RFN/nodeB frame number, BFN, time difference by a RNC-NodeB node synchronisation procedure,
informing the terminal on the time base in target system.

14. Method according to any one of claims 10 to 13, comprising at least one of:
informing the target system on a source system timing, e.g. CFN-timing "now",
performing a RNC-NodeB node synchronisation,
receiving an answer from the target system having a time-stamp or time indication,
calculating, based on the received time-stamp or time information, a timing offset between the source system and the target system;
providing a timing offset by a node or time server,
receiving from the node or time server which is aware of radio timing in both systems, one or more timing parameters such as time offset or drift,
informing a terminal on a handover time, optionally in terms of source-system timebase,
informing the terminal on a current time-offset between the source and target systems,
providing a time server,
co-locating the time server in a mobility management entity, MME,
the time server having knowledge on timers in both systems, such as GPS time for e.g. a cdma2000 network, and e.g. BFNs/CFNs (i.e. BFNs plus offsets) for 3GPP,
having knowledge of GPS-time,
deriving knowledge of BFNs/CFNs of 3GPP nodes,
performing a RNC-NodeB node synchronisation procedure,
providing user equipment measurement for time-relation,
providing a dual-receiver user equipment configured to read or calculate a time-offset between a source system and a target system,
the user equipment reporting the time-offset to the source system.

15. Computer program product, comprising code means configured to carry out or implement, when run on a processor, the method as defined in claim 10, or any one of claims 11 to 14.
